# EUROPEAN PATENT APPLICATION

(11) **EP 4 120 269 A1**
(43) Date of publication of application: **18.01.2023**
(21) Application number: 21768795.3
(22) Date of filing: 07.02.2021
(51) Int. Cl.: G11B 19/02

(54) **AUDIO PLAYING METHOD AND APPARATUS, AND STORAGE MEDIUM AND TERMINAL**

(30) Priority: 10.03.2020 CN 202010160836
(71) Applicant: GUANGDONG OPPO MOBILE TELECOMMUNICATIONS CORP., LTD., Dongguan, Guangdong 523860 (CN)
(72) Inventor: DENG, Junjie, Dongguan, Guangdong 523860 (CN)
(74) Representative: Manitz Finsterwald Patent- und Rechtsanwaltspartnerschaft mbB
(86) International application number: PCT/CN2021/075729
(87) International publication number: WO 2021/179869

(57) **Abstract**

The embodiment of the disclosure provide an audio playback method, apparatus, storage medium and terminal, wherein the method comprises:in response to receiving an instruction of acquiring a recommended audio input through an audio playback interface, acquiring the recommended audio;in response to receiving an instruction of playing the recommended audio, saving the playback information of a target audio currently played on a audio playback interface, and playing the recommended audio;in response to receiving an instruction of ceasing to play the recommended audio,and playing the target audio on the audio playback interface according to the playback information.The audio playback method provided by the embodiment of the disclosure can effectively avoid the audio play experience interruption caused by the insertion of recommended audio or other audio.

## Description

### TECHNICAL FIELD

The disclosure relates to the field of computer technology, and particular to an audio playback method, apparatus, storage medium and terminal.

### BACKGROUND

The disclosure of the background technology in the disclosure belongs to the related art related to the disclosure, and is only configured to explain and facilitate the understanding of the content of the disclosure, and shall not be understood as the applicant clearly believes or presumes that the disclosure considers the prior art on the disclosure date of the first disclosure.

When using audio playback software or web-page to play other audio (such as a audition audio or recommended audio) other than audio of the current playlist, the currently playing audio and the playlist may be covered and disappeared due to the insertion of other audio. After the other audio is played, the previous play state cannot be restored, so the user play experience is interrupted by playing other audio outside the playlist.

### SUMMARY

Implementations of the disclosure provide an audio playback method, apparatus, storage medium and terminal, which can solve the problem that the currently played audio and the playlist may be covered and disappeared due to the insertion of other audio and cannot be recovered.Technical solutions of the disclosure are implemented as follows.

In the first aspect,embodiment of the disclosure provide an audio playback method, comprising:in response to receiving an instruction of acquiring a recommended audio input through an audio playback interface, acquiring the recommended audio;in response to receiving an instruction of playing the recommended audio, saving the playback information of a target audio currently played on a audio playback interface, and playing the recommended audio;in response to receiving an instruction of ceasing to play the recommended audio,and playing the target audio on the audio playback interface according to the playback information.

In the second aspect, embodiment of the disclosure provide an audio play apparatus, comprising:a recommended audio acquisition module is configured to in response to receive an instruction of acquiring a recommended audio input through an audio playback interface, acquire the recommended audio;a recommended audio playback module is configured to in response to receive an instruction of playing the recommended audio, save the playback information of a target audio currently played on a audio playback interface, and play the recommended audio;a target audio playback module is configured to in response to receiving an instruction of ceasing to play the recommended audio,and play the target audio on the audio playback interface according to the playback information.

In the third aspect, embodiment of the disclosure provide a computer-readable storage medium on which a computer program is stored. When the program is executed by a processor, the blocks of realizing any of the above methods are provided.

In the fourth aspect, embodiment of the disclosure provide a terminal, including a memory, a processor and a computer program stored on a memory and executable on a processor ,When the processor executes the program, the blocks to realize any of the above methods are provided.

The beneficial effects brought by the technical solutions provided by some embodiment of the disclosure at least include:

According to the audio play method provided by at least one embodiment of the disclosure, the terminal receives the recommended audio acquisition instruction input for the audio playback interface, obtains the recommended audio, and then saves the play information of the target audio currently played on the audio playback interface and plays the recommended audio after receiving the play instruction for the recommended audio input;When receiving the play off instruction for the recommended audio input, the target audio is played on the audio playback interface according to the play information.In at least one embodiment,when the recommended audio/other audios other than the playlist are played, the play information of the target audio being played originally is saved, the terminal can restore / restore the playlist of the target audio and the play state of the target audio according to the saved play information, which can effectively avoid the audio play experience interruption caused by the insertion of recommended audio / other audio.

### BRIEF DESCRIPTION OF THE DRAWINGS

In order to explain technical solutions in embodiment of the disclosure more clearly, the drawings needed in the description of the embodiment will be briefly introduced below. It is obvious that the drawings in the following description are only some embodiment of the disclosure. For those of ordinary skill in the art, other drawings can be obtained according to these drawings without paying creative work
FIG. 1 is a schematic flowchart of an audio playback method provided in implementations of the disclosure.
FIG. 2 is a schematic flowchart of the acquisition process of a recommended song provided in implementations of the disclosure.
FIG. 3 is a schematic flowchart of an audio playback method provided in implementations of the disclosure.
FIG. 4 is a schematic flowchart of the playing process of a recommended music provided in implementations of the disclosure.
FIG. 5 a schematic flowchart of an audio playback method provided in implementations of the disclosure.
FIG. 6 is a illustration diagram of the audio play process provided in implementations of the disclosure.
FIG. 7 is a schematic structural diagram of an audio play apparatus provided in implementations of the disclosure.
FIG. 8 is a schematic structural diagram of an audio play apparatus provided in implementations of the disclosure.
FIG. 9 is a schematic structural diagram of an audio play apparatus provided in implementations of the disclosure.
FIG.10 is a structure block diagram of a terminal provided in implementations of the disclosure.

### DETAILED DESCRIPTION

Technical solutions of implementations of the disclosure will be described clearly and completely below with reference to the accompanying drawings of implementations of the disclosure. It can be understood that, the illustrated embodiment are only part of the embodiment of the disclosure, not all the embodiment.Based on the embodiment in the disclosure,All other embodiment obtained by ordinary technical personnel in the art without creative labor belong to the scope of protection of the disclosure.

In the description of this disclosure, it should be understood that the terms "first" and "second" are only used for the purpose of description and cannot be understood as indicating or implying relative importance.In the description of the disclosure, it should be noted that, unless otherwise specified and limited, the terms "including" and "having" and any variation thereof are intended to cover the exclusive inclusion.For example, a process, method, system, product or apparatus that contains a series of blocks or units is not limited to the listed blocks or units, but may also include blocks or units not listed, or may also include other blocks or units that are inherent to these processes, methods, products or equipment.For those of ordinary skill in the art,The specific meanings of the above terms in this disclosure can be understood according to specific circumstances.In addition, in the description of the disclosure, unless otherwise specified, "multiple" refers to two or more. "And / or" describes the association relationship of associated objects, indicating that there can be three kinds of relationships, for example, a and / or B. It can indicate that there are three situations: a exists alone, a and B exist at the same time, and B exists alone.The character '/' generally indicates that the relationship between the front and rear associated objects is a "or".

The audio playback method provided by embodiment of the disclosure will be introduced in detail in combination with the attached drawings 1-6.

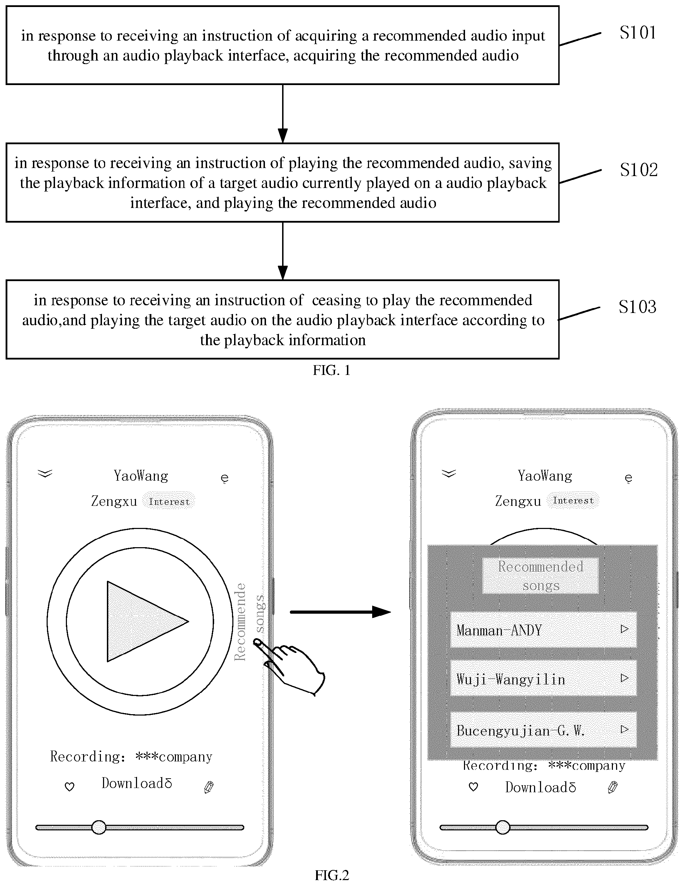

Please refer to FIG. 1 for a schematic flowchart of an audio playback method provided in implementations of the disclosure.

As illustrated in FIG. 1, the method provided in implementations of the disclosure may include the following blocks:

At block S101, the method may include n response to receiving an instruction of acquiring a recommended audio input through an audio playback interface, acquiring the recommended audio;

The user sets a frequently used playlist on the audio play software or web-page. When any one of the audios in the playlist is played, the audio playback interface displays the played audio.Wherein,the audio playback interface has a recommended audio acquisition button, and the user can click the button to acquire audio similar to the currently played audio.

The recommended audio may also be acquired through some key combination or shortcut key, or through voice input.The audio is not limited to one of the operas, songs or video original sound clips, and the playlist can be a list of a certain album collected by the user,or it is a list of frequently listened audio that is formed by adding multiple audio manually for many times.

Taking songs as an example, FIG. 2 illustrates the process of acquiring recommended songs.

The interface diagram illustrated on the left side of FIG. 2 is an audio playback interface, which displays the currently playing songs, and the played songs are selected from playlist frequently used by the user..On the audio playback interface, the user can click the "recommended songs" button in the figure to pop up the window illustrated on the right side of FIG. 2, which contains other songs with high similarity to the currently playing song
in other embodiment, "recommended songs" may also be replaced with" similar songs " or the like.

At block S102, the method may include in response to receiving an instruction of playing the recommended audio, saving the playback information of a target audio currently played on a audio playback interface, and playing the recommended audio.
in at least one embodiment,the currently playing songs in the playlist is illustrated as the target audio.

When the user chooses to play the acquired recommended audio, the currently playing target audio may be paused, and the terminal acquires and saves the playback information of the target audio, and plays the recommended audio.The playback information includes but is not limited to the target audio name, the target audio list, the target audio playback progress, and the audio contents in the target audio list.

At block S103, the method may include in response to receiving an instruction of ceasing to play the recommended audio,and playing the target audio on the audio playback interface according to the playback information.

The playback cease instruction may be generated when the user manually ceases the recommended audio in the process of playing the recommended audio, or it may be automatically generated when the recommended audio play is finished. After receiving the recommended audio playback cease instruction, the terminal continues to play the target audio on the audio playback interface according to the saved playback information.Continuing play is the restoration and recovery of the play state of the target audio.For example, when the recommended audio is played, the target audio has been played to 02:35,and after the recommended audio play is ceased, the terminal controls the player to restore the playback progress of the target audio to 02:35, and continue to play the remaining audio after 02:35.

According to the audio playback method provided in at least one embodiment of the disclosure, the terminal receives the recommended audio acquisition instruction input for the audio playback interface, acquires the recommended audio, and then saves the playback information of the target audio currently played on the audio playback interface and plays the recommended audio after receiving the playback instruction for the recommended audio input;When receiving playback cease instruction for the recommended audio input, the target audio is played on the audio playback interface according to the playback information.In at least one embodiment of the disclosure, when the recommended audio or other audio outside the playlist is played, the playback information of the originally playing target audio is saved,and when the recommended audio or other audio is played, the terminal may restore or recover the play state of the target audio of the playlist according to the saved playback information, which can effectively avoid the audio play experience interruption caused by the insertion of recommended audio / other audio.

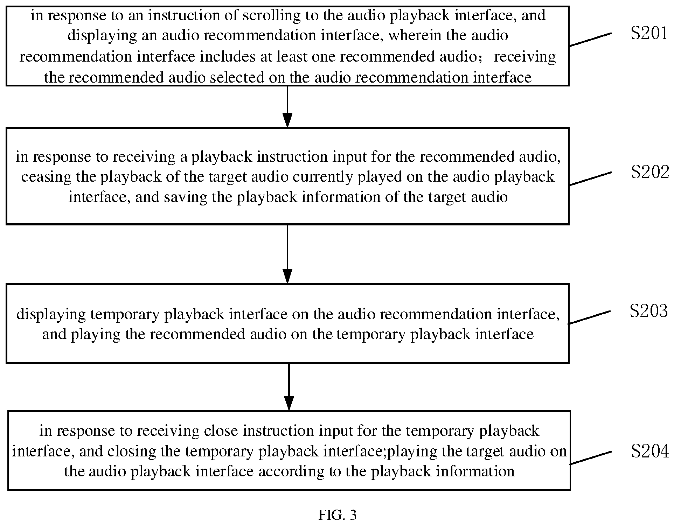

Please refer to FIG. 3 for a schematic flowchart of an audio playback method provided in implementations of the disclosure.

As illustrated in FIG. 3, the method of one embodiment of the disclosure may include the following blocks:

At block S201, the method may include in response to an instruction of scrolling to the audio playback interface, and displaying an audio recommendation interface, wherein the audio recommendation interface includes at least one recommended audio receiving the recommended audio selected on the audio recommendation interface.

Taking music as an example, in a feasible implementation method, a certain song in the album list is clicked to play, the audio playback interface displays the music, and the user swipes to the left or right gesture to enter the audio recommendation interface,and the audio recommendation interface includes some detailed information of the singer of the music being played and a plurality of recommended songs which are similar to the music. The user selects one of the recommended songs listed in the audio recommendation interface for playing.

In particular, the scroll instruction may also be a voice scroll instruction or a button-type scroll instruction or the like.

At block S202, the method may include in response to receiving a playback instruction input for the recommended audio, ceasing the playback of the target audio currently played on the audio playback interface, and saving the playback information of the target audio.

When the terminal receives the playback instruction input by the user for the selected recommended song, the terminal controls the currently playing target audio (target song) to pause playing, and saves the current play state of the target audio.The saved information includes the name of the song, the position of the song in the playlist and the tracks contained in the playlist or the like.The recommended song may be an adapted version of the target song, a cover version, other songs with high melody similarity or the like.

At block S203, the method may include displaying temporary playback interface on the audio recommendation interface, and playing the recommended audio on the temporary playback interface.

After the playback information of the target audio is successfully saved, a temporary playback interface is displayed on the audio playback interface, which is configured to display the recommended audio (recommended song) to be played.The temporary player interface corresponds to a player, which is a temporary player.

in at least one embodiment, two independent players are configured to respectively play the audios in the user's frequently used list and other audios outside the list.In particular, in other embodiment, the temporary player may also be configured to play non-recommended audio outside the frequently used list.For example,The primary player (that is, the player corresponding to the audio playback interface) is playing a song in the list. When the user browses the rank list on the software or web-page and wants to listen to a song in the ranking list, the user clicks the play button,and the temporary player can play the the audition song, and the song in the list will be paused;The primary player will continue to play the songs in the list after the audition song is finished or is ceased midway.

At block S204, the method may include in response to receiving close instruction input for the temporary playback interface, and closing the temporary playback interface;playing the target audio on the audio playback interface according to the playback information.

When the temporary playback interface is closed, the corresponding temporary player is also closed.After receiving the recommended audio play cease instruction, the terminal continues to play the target audio in the audio playback interface according to the saved playback information.

Compared with the play function of the player corresponding to the audio playback interface, the functions of the temporary player are more streamlined.For example, the player corresponding to the audio playback interface includes sound quality, sound effect selection, comment sharing, double speed play, and song cycle mode or the like, while the temporary player only includes the functions of collecting / adding and cutting songs.

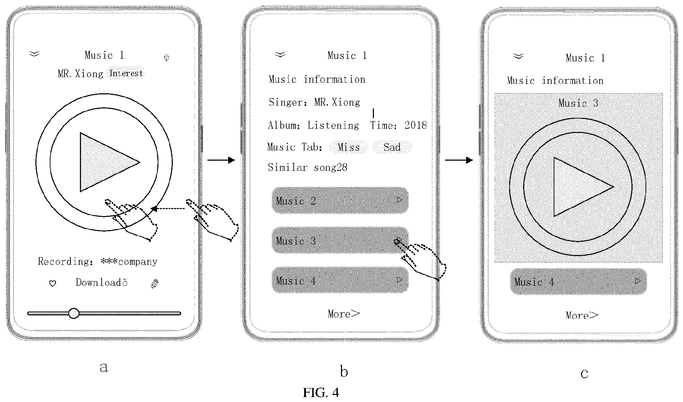

Please refer to FIG. 4 for a schematic flowchart of the playing process of a recommended music provided in implementations of the disclosure.

The interface illustrated in a in the figure is the audio playback interface, and the music in the frequently used playlist is playing.The user may scroll to the music recommendation interface by making the gesture of sliding to the left in the interface (the interface illustrated in b in the figure),which displays the detailed information of the music being played and some recommended songs similar to the music. In the recommended list formed by these recommended songs, the user can select the recommended music from the recommended music,The user selects a recommended song to listen to according to his preference and clicks the play button.Based on the received recommended song playback instruction, the terminal controls the song played on the audio playback interface to pause playback, and saves the playback information (such as the playback progress) of the song. And then,the terminal controls to pop up a temporary playback interface to play the recommended music to be played (interface c in the figure).

In the process of playing recommended songs, if the user does not want to continue listening, he can click the cease button on the temporary playback interface to end the playing of the recommended songs, and return to the music recommendation interface again (the interface illustrated in b in the figure). At this time, the terminal may control the player corresponding to the audio playback interface to continue playing the music previously played in the frequently used list according to the saved playback information.

In particular, when multiple recommended songs define a list and the user does not close the temporary playback interface during the playing of recommended songs, the temporary player may play the recommended songs one by one in the recommended songs list until the user manually ceases the temporary playback interface.Of course,The temporary player can also automatically close the temporary playback interface after all the recommended songs in the recommended list are played.

In the audio playback method provided in at least one embodiment, two independent players are configured to respectively play the audios in the user's frequently used list and other audios outside the list: after the user selects the recommended audio to listen to on the audio recommendation interface,The terminal controls the player corresponding to the audio playback interface to pause the played audio and save the playback information of the currently playing audio (that is, the audio in the playlist), and call out the temporary player to play the selected recommended audio;When the recommended audio is played or the user actively closes the temporary playback interface during the play, the terminal controls the temporary player to cease and restores/recovers the previous play state of the player corresponding to the audio playback interface according to the stored playback information, and continues to finish playing the audio in the playlist.In at least one embodiment, the audio in the playlist and the recommended audio are played by different players, so there is no interference between the audios,and the play fluency is high when switching audio, which improves the audition experience.

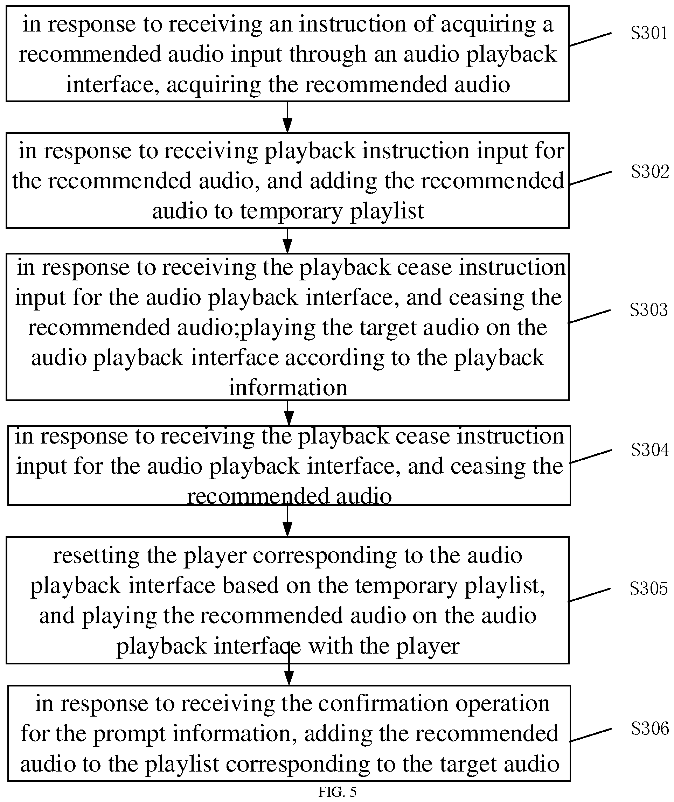

Please refer to FIG. 5 for a schematic flowchart of an audio playback method provided in implementations of the disclosure.

As illustrated in FIG. 5, the method of one embodiment of the disclosure may include the following blocks:

At block S301, the method may include in response to receiving an instruction of acquiring a recommended audio input through an audio playback interface, acquiring the recommended audio.

The user sets a frequently used playlist on the audio play software or web-page. and when any one of the audios in the playlist is played, the audio playback interface displays the played audio.Wherein,the audio playback interface has a recommended audio acquisition button, and the user click the button to acquire audio similar to the currently played audio.

The recommended audio may also be acquired through some key combination or shortcut key, or through voice input.The audio is not limited to one of the operas, songs or video original sound clips, and the playlist can be a list of a certain album collected by the user,Or it is a list of frequently listened audio that is formed by adding multiple audio manually for many times.

At block S302, the method may include in response to receiving playback instruction input for the recommended audio, and adding the recommended audio to temporary playlist..

The terminal receives the playback instruction input by the user for the acquired recommended music, and controls the playing target audio to pause playing, and saves the current play state of the target audio.
one of embodiment uses the same player to play the audio in the frequently used list and the recommended audio. The user can add the acquired recommended audio to the temporary playlist and perform the next block.

At block S303, the method may include resetting the player corresponding to the audio playback interface based on the temporary playlist, and playing the recommended audio on the audio playback interface with the player.

The player corresponding to the audio playback interface is reset according to at least one recommended audio added in the temporary playlist, and then the player corresponding to the audio playback interface is configured to play the recommended audio after receiving the playback instruction input by the user for the recommended audio.

At block S304, the method may include in response to receiving the playback cease instruction input for the audio playback interface, and ceasing the recommended audio.

In at lease one embodiment, the same player is configured to play the audio in the frequently used list and the recommended audio. Therefore, in the process of playing recommended audio, when the terminal receives the playback cease instruction input for the audio playback interface, indicating that the user wants to turn off playing the recommended audio, the terminal controls to perform this operation,and restores the previous play state of the player corresponding to the audio playback interface according to the saved playback information, that is to controls the player corresponding to the audio playback interface to continue to play the audio in the frequently used list.

In other embodiment, the audio playback method may also include block s305 and block S306.

At block S305, the method may include outputting a prompt information on whether to retain the recommended audio.

In particular, after receiving the playback cease instruction input by the user for the audio playback interface, the terminal can output to the user the prompt information of whether to add the played recommended audio to the frequently used playlist.According to the listening experience of the recommended audio, the user can input the confirmation instruction or rejection operation.

When the user chooses not to retain the recommended audio, the terminal controls to cease the play of the recommended audio, and continues to play the audio in the list according to the saved playback information.When the user chooses to retain the recommended audio, block S306 is performed.

The prompt information may be output during the playback of recommended audio ,or may be output after the recommended audio is played.The prompt information may be output in the form of text,accompanied by vibration feedback or the like.

At block S306, the method may include in response to receiving the confirmation instruction for the prompt information, adding the recommended audio to the playlist corresponding to the target audio, and playing the target audio on the audio playback interface according to the playback information.

When the user confirms to retain the recommended audio, the terminal controls to add the recommended audio to the playlist of target audio play.Furthermore, when there are multiple playlists in the audio play software or web-page, the user may also select which playlist to add the recommended audio to.The terminal controls the player to continue to play the target audio according to the saved playback information.When the target audio is finished, the player plays the remaining audio in the playlist according to the list play mode set by the user (such as single loop, random play, sequential play, etc.).

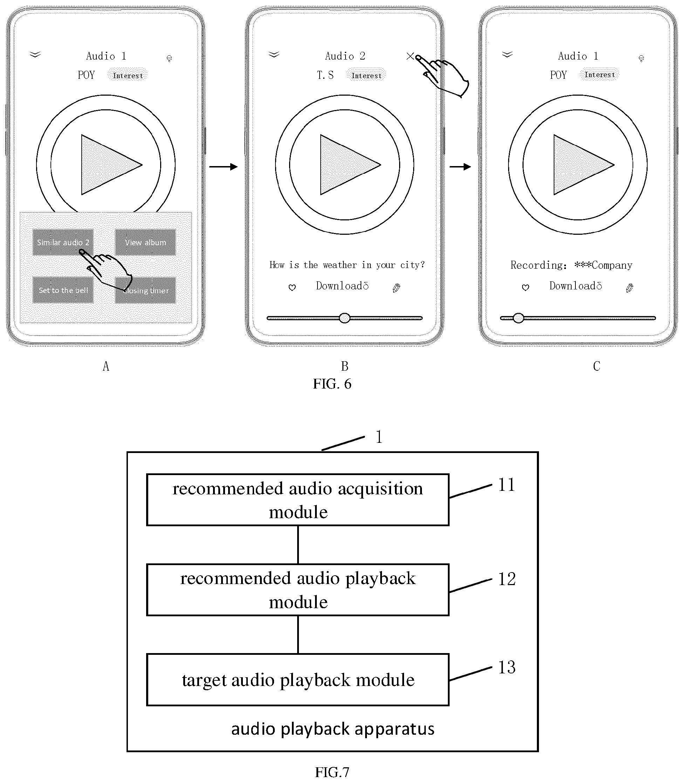

Please refer to FIG. 6 for a illustration diagram of the audio play process provided in implementations of the disclosure.

The method may include clicking the corresponding function key on the audio playback interface to enter the interface illustrated in A in the figure, and displaying Audio 2 with high similarity to the currently playing audio Ion Interface A ,and clickig the play button to play the audio 2. The terminal controls audio 1 to enter the pause state and save the playback information of audio 1 (when playing audio 2, if audio 1 is in the play pause state,then the terminal directly saves the playback information of audio 1), and resets the player to play the audio 2 (as illustrated in interface B in the figure);During the play of similar audio 2, the user can click the "×" cease button on the B interface to cease the play of audio 2. Based on the user's operation, the terminal controls the player to continue to play the audio 1 according to the saved playback information of audio 1 (enter the interface illustrated in C in the figure).

The method may include clicking the corresponding function key on the audio playback interface to enter the interface illustrated in A in the figure, and displaying Audio 2 with high similarity to the currently playing audio Ion Interface A ,and clicking the play button to play the audio 2. The terminal controls audio 1 to enter the pause state and save the playback information of audio 1 (when playing audio 2, if audio 1 is in the play pause state,then the terminal directly saves the playback information of audio 1), and resets the player to play the audio 2 (as illustrated in interface B in the figure);During the play of similar audio 2, the user can click the "×" cease button on the B interface to cease the play of audio 2. Based on the user's operation, the terminal controls the player to continue to play the audio 1 according to the saved playback information of audio 1 (enter the interface illustrated in C in the figure).

In at least one embodiment,the method can add the recommended audio to the temporary playlist. For the recommended audio in the temporary playlist, the terminal can play the songs in the temporary playlist (such as sequential play, random play, etc.) according to the playing rules set by the audio play software / website;Based on the temporary playlist, the terminal can reset the player corresponding to the audio playback interface,And the player is configured to play recommended audio;When the recommended audio is played or terminated manually, the audio playback interface will resume playing the audio in the frequently used list according to the saved playback information.In at least one embodiment, the terminal can also timely prompt pop up prompt information on whether to retain the recommended audio according to the playback progress of the recommended audio. According to the prompt information and the recommended audio audition experience, the user can choose to add the recommended audio to the frequently used playlist to facilitate subsequent listening to the audio.

The following is an apparatus embodiment of the present disclosure, which can be configured to implement the method embodiment of the present disclosure. For details not disceased in the apparatus embodiment of the present disclosure, please refer to the method embodiment of the present disclosure.

Refer to FIG. 7 for a schematic structural diagram of an audio play apparatus provided in implementations of the disclosure.The audio play apparatus can be realized as all or part of a terminal through software, hardware, or a combination of both, and can also be integrated on a server as an independent unit.The audio play apparatus in the embodiment of the disclosure is applied to the terminal,The apparatus 1 includes a recommended audio acquisition module 11, a recommended audio playback module 12 and a target audio playback module 13.

A recommended audio acquisition module 11 is configured to in response to receive an instruction of acquiring a recommended audio input through an audio playback interface, acquire the recommended audio;

A recommended audio playback module 12 is configured to in response to receive an instruction of playing the recommended audio, save the playback information of a target audio currently played on a audio playback interface, and play the recommended audio;

A target audio playback module 13 is configured to in response to receiving an instruction of ceasing to play the recommended audio,and play the target audio on the audio playback interface according to the playback information.

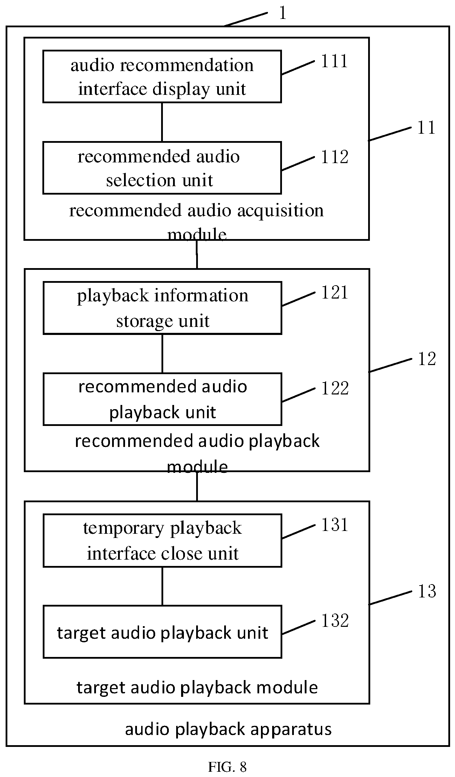

Please refer to FIG. 8 for a schematic structural diagram of an audio play apparatus provided in implementations of the disclosure.

Alternatively, as illustrated in FIG. 8, the recommended audio acquisition module 11 in the audio play apparatus 1 provided by the embodiment of the disclosure comprises:

An Audio recommendation interface display unit 111 is configured to in response to an instruction of scrolling to the audio playback interface, and display an audio recommendation interface, wherein the audio recommendation interface includes at least one recommended audio;

Recommendation audio selection unit 112 is configured to receive recommended audio selected for the audio recommendation interface.

The recommended audio playback module 12 comprises:

A playback information storage unit 121 is configured to in response to receiving a playback instruction input for the recommended audio, cease the playback of the target audio currently played on the audio playback interface, and save the playback information of the target audio;

A recommended audio playback module 122 is configured to display the temporary playback interface on the audio recommendation interface, and play the recommended audio on the temporary playback interface.

The target audio playback module 13 comprises:
A temporary playback interface closing unit 131 is configured to in response to receiving close instruction input for the temporary playback interface, and close the temporary playback interface.

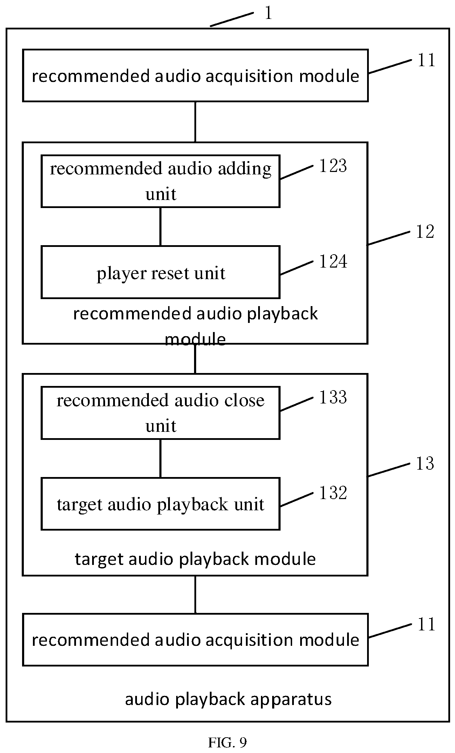

Please refer to FIG. 9 for a schematic structural diagram of an audio play apparatus provided in implementations of the disclosure.

Alternatively, as illustrated in FIG. 9, the recommended audio playback module 12 in the audio play apparatus 1 provided by the embodiment of the disclosure comprises:
A recommended audio adding unit 123 is configured to in response to receiving playback instruction input for the recommended audio, and adding the recommended audio to temporary playlist;

A player reset unit 124 is configured to reset the player corresponding to the audio playback interface based on the temporary playlist, and play the recommended audio on the audio playback interface with the player.

The target audio playback module 13 comprises:
A target audio cease unit 133 is configured to receive a playback cease instruction input for the audio playback interface, and ceases the recommended audio; A target audio playback unit 132 plays the target audio on the audio playback interface according to the playback information.

The apparatus 1 further comprises:
Prompt information output module 14 is configured to output a prompt information on whether to retain the recommended audio.
recommended audio adding unit 123 is also configured to:in response to receiving the confirmation instruction for the prompt information, add the recommended audio to the playlist corresponding to the target audio.

It should be noted that when implementing the audio playback method, the audio play apparatus provided by the above embodiment only illustrates the division of the above functional modules. In practical application, the above functions can be allocated by different functional modules according to needs, that is, an internal structure of the apparatus can be divided into different functional modules to complete all or part of the functions described above. In addition, the call connection apparatus provided by the above embodiment belongs to the same concept as the embodiment of the call connection method. The embodiment and implementation process are detailed in the method embodiment, which will not be repeated here.

The above serial numbers of the embodiment of the present disclosure are only for description and does not represent the advantages and disadvantages of the embodiment.

In the audio play apparatus provided by the embodiment of the disclosure, the terminal receives the recommended audio acquisition instruction input for the audio playback interface, accquires the recommended audio, and then saves the playback information of the target audio currently played on the audio playback interface and plays the recommended audio after receiving the playback instruction for the recommended audio input;When receiving playback cease instruction for the recommended audio input, the target audio is played on the audio playback interface according to the playback information.In at least one embodiment of the disclosure, when the recommended audio or other audio outside the playlist is played, the playback information of the originally playing target audio is saved,and when the recommended audio or other audio is played, the terminal may restore or recover the play state of the target audio of the playlist according to the saved playback information, which can effectively avoid the audio play experience interruption caused by the insertion of recommended audio / other audio.

An embodiment of the present disclosure provides a non-transitory computer-readable storage medium stored with computer programs therein. The computer programs are configured to, when being executed by a processor, implement the blocks of the method of any of the foregoing embodiment. The non-transitory computer-readable storage medium may include, but is not limited to, any type of disk, including floppy disk, optical disk, digital video disc (DVD), compact disc read-only memory (CD-ROM), micro drive, magneto-optical disk, read-only memory (ROM), random access memory (RAM), erasable programmable read-only memory (EPROM), electrically erasable programmable read only memory (EEPROM), dynamic random access memory (DRAM), video random access memory (VRAM), flash memory apparatus, magnetic card or optical card, nano system (including molecular memory IC), or any type of medium or apparatus suitable for storing instructions and/or data.
embodiment of the present disclosure provides a terminal, including a memory, a processor and computer programs stored in the memory and executable by the processor. The processor is configured to, when executing the computer programs, implement the blocks of the method of any of the above embodiment.

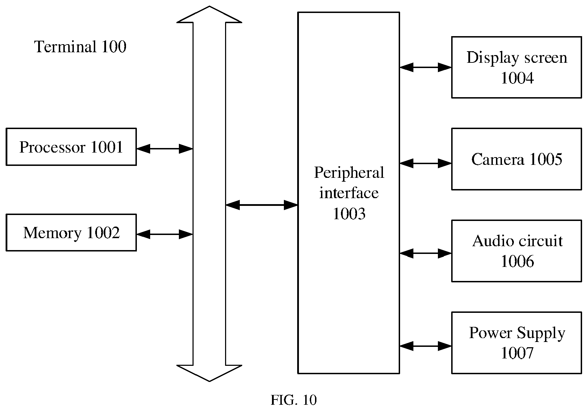

Please refer to FIG. 10, which illustrates a schematic structural block diagram of a terminal according to an embodiment of the present disclosure.

As illustrated in FIG. 10, the terminal 100 may include a processor 1001 and a memory 1002.

In the embodiment of the present disclosure, the processor 1001 is a control center of a computer system, which can be a processor of a physical machine or a processor of a virtual machine. The processor 1001 may include one or more cores, such as a 4-core processor, an 8-core processor, and the like. The processor 1001 can be implemented in at least one hardware form of digital signal processing (DSP), field programmable gate array (FPGA) and programmable logic array (PLA). The processor 1001 may also include a main processor and a processor. The main processor is a processor for processing data in the wake-up state, also known as a central processing unit (CPU); and the processor is a low-power processor used to process data in standby mode.

The memory 1002 may include one or more computer-readable storage medium, which may be non-transitory. The memory 1002 may also include a high-speed random-access memory and a nonvolatile memory, such as one or more disk storage apparatus and flash storage apparatus. In some embodiment of the present disclosure, the non-transitory computer-readable storage medium in the memory 1002 is used to store at least one instruction for implemented by the processor 1001 to implement the method in the embodiment of the present disclosure.

In some embodiment, the terminal 100 may further include a peripheral interface 1003 and at least one peripheral apparatus. The processor 1001, the memory 1002 and the peripheral interface 1003 may be connected through buses or signal lines. Each peripheral apparatus can be connected to the peripheral interface 1003 through a bus, signal line or circuit board. Specifically, the peripheral apparatus includes at least one of a display screen 1004, a camera 1005, and an audio circuit 1006.

The peripheral interface 1003 may be configured to connect at least one peripheral apparatus related to input/output (I/O) to the processor 1001 and the memory 1002. In some embodiment of the present disclosure, the processor 1001, the memory 1002 and the peripheral interface 1003 are integrated on a same chip or circuit board. In some other embodiment of the present disclosure, any one or all of the processor 1001, the memory 1002 and the peripheral interface 1003 may be implemented on a separate chip or circuit board. The embodiment of the present disclosure are not specifically limited to this.

The display screen 1004 is configured to display the user interface (UI). The UI can include graphics, text, icons, videos, and any combination thereof. When the display screen 1004 is a touch display screen, the display screen 1004 further has the ability to collect touch signals on or above the surface of the display screen 1004. The touch signal can be inputted to the processor 1001 as a control signal for processing. At this time, the display screen 1004 can further be configured to provide virtual buttons and/or virtual keyboards, also known as soft buttons and/or soft keyboards. In some embodiment of the present disclosure, the display screen 1004 can be one, arranged on a front panel of the terminal 100. In other embodiment of the present disclosure, the display screen 1004 may be at least two, which are respectively arranged on different surfaces of the terminal 100 or in a folded design. In still other embodiment of the present disclosure, the display screen 1004 may be a flexible display screen arranged on a curved surface or folding surface of the terminal 100. Even, the display screen 1004 can be set as a non-rectangular irregular figure, that is, a special-shaped screen. The display screen 1004 can be made of liquid crystal display (LCD), organic light emitting diode (OLED) and other materials.

The camera 1005 is configured to collect images or videos. In an illustrated embodiment, the camera 1005 includes a front camera and a rear camera. Generally, the front camera is arranged on the front panel of the terminal, and the rear camera is arranged on the back of the terminal. In some embodiment, there are at least two rear cameras, which are any one of a main camera, a depth of field camera, a wide-angle camera and a telephoto camera respectively, thereby to realize the fusion of the main camera and the depth of field camera to realize the background virtualization function, the fusion of the main camera and the wide-angle camera to realize the panoramic shooting, virtual reality (VR) shooting function or other fusion shooting functions. In some embodiment of the present disclosure, the camera 1005 may also include a flash lamp. The flash lamp can be a monochrome temperature flash lamp or a two-color temperature flash lamp. Dual color temperature flash lamp refers to the combination of warm light flash lamp and cold light flash lamp, which can be configured for light compensation under different color temperatures.

The audio circuit 1006 may include a microphone and a speaker. The microphone is configured to collect the sound waves of the user and the environment, convert the sound waves into electrical signals and input them to the processor 1001 for processing. For the purpose of stereo acquisition or noise reduction, the microphones can be multiple, which are respectively arranged on different parts of the terminal 100. The microphone can also be an array microphone or an omnidirectional acquisition microphone.

The power supply 1007 is configured to supply power to each component in the terminal 100. The power supply 1007 may be alternating current (AC), direct current (DC), disposable battery or rechargeable battery. When the power supply 1007 includes a rechargeable battery, the rechargeable battery may be a wired rechargeable battery or a wireless rechargeable battery. The wired rechargeable battery is a battery charged through wired line, and the wireless rechargeable battery is a battery charged through wireless coil. The rechargeable battery can also be used to support fast charging technology.

The structure block diagram of the terminal illustrated in the embodiment of the present disclosure does not constitute a limitation on the terminal 100. the terminal 100 may include more or fewer components than illustrated in the figure, or combine some components, or adopt different component arrangements.

In the present disclosure, the terms "first", "second" and the like are only used for descriptive purposes and cannot be understood as indicating or implying relative importance or order. The term "multiple" refers to two or more, unless otherwise expressly defined. The terms "installation", "connected", "connection", "fixation" and other terms shall be understood in a broad sense. For example, "connection" can be fixed connection, removable connection, or integrated connection; "connected" can be directly connected or indirectly connected through an intermediate media. For those skilled in the art, the specific meaning of the above terms in the present disclosure can be understood according to the specific circumstances.

In the description of this present disclosure, it should be understood that the orientation or position relationship indicated by the terms "up", "down" and so on is based on the orientation or position relationship illustrated in the attached drawings, which is only for the convenience of describing this present disclosure and simplifying the description, rather than indicating or implying that the apparatus or unit referred to must have a specific direction, structure and operation in a specific orientation. Therefore, it cannot be understood as a limitation of the present disclosure.

The above is only the illustrated embodiment of the present disclosure, but the scope of protection of the present disclosure is not limited to this. Any technician familiar with the technical field can easily think of changes or replacements within the technical scope disceased in the present disclosure, which should be covered by the scope of protection of the present disclosure. Therefore, the equivalent changes made according to the claims of the present disclosure still fall within the scope of the present disclosure.

## Claims

1. An audio playback method, comprising:
in response to receiving an instruction of acquiring a recommended audio input through an audio playback interface, acquiring the recommended audio;
in response to receiving an instruction of playing the recommended audio, saving the playback information of a target audio currently played on a audio playback interface, and playing the recommended audio;
in response to receiving an instruction of ceasing to play the recommended audio,and playing the target audio on the audio playback interface according to the playback information.

2. The method according to claim 1, wherein the receiving the in response to receiving an instruction of acquiring a recommended audio input through an audio playback interface, acquiring the recommended audio comprises:
in response to an instruction of scrolling to the audio playback interface, and displaying an audio recommendation interface, wherein the audio recommendation interface includes at least one recommended audio;
receiving the recommended audio selected on the audio recommendation interface.

3. The method according to claim 1, wherein the in response to receiving an instruction of playing the recommended audio,saving the playback information of a target audio currently played on a audio playback interface, and playing the recommended audio comprises:
in response to receiving a playback instruction input for the recommended audio, ceasing the playback of the target audio currently played on the audio playback interface, and saving the playback information of the target audio;
displaying temporary playback interface on the audio recommendation interface, and playing the recommended audio on the temporary playback interface.

4. The method according to claim 3, wherein the in response to receiving an instruction of ceasing to play the recommended audio,and playing the target audio on the audio playback interface according to the playback information comprises:
in response to receiving close instruction input for the temporary playback interface, and closing the temporary playback interface;
playing the target audio on the audio playback interface according to the playback information.

5. The method according to claim 3, wherein the playing the recommended audio on the temporary playback interface comprises:
acquiring temporary player corresponding to the temporary playback interface, and using the temporary player to play the recommended audio on the temporary playback interface, wherein the temporary player is different from the player corresponding to the audio playback interface.

6. The method according to claim 1, wherein the in response to receiving an instruction of playing the recommended audio, saving the playback information of a target audio currently played on a audio playback interface, and playing the recommended audio comprises:
in response to receiving playback instruction input for the recommended audio, and adding the recommended audio to temporary playlist;
resetting the player corresponding to the audio playback interface based on the temporary playlist, and playing the recommended audio on the audio playback interface with the player.

7. The method according to claim 6, wherein the in response to receiving an instruction of playing the recommended audio, saving the playback information of a target audio currently played on a audio playback interface, and playing the recommended audio comprises:
in response to receiving the playback cease instruction input for the audio playback interface, and ceasing the recommended audio;
playing the target audio on the audio playback interface according to the playback information.

8. The method according to claim 7, wherein the playing the target audio to the playback information comprises:
acquiring a playback progress corresponding to the target audio based on the playback information;
playing remaining audio corresponding to the target audio according to the playback progress.

9. The method according to claim 1, wherein the method further comprises:
outputting a prompt information on whether to retain the recommended audio;
in response to receiving a confirmation instruction for the prompt information, adding the recommended audio to the playlist corresponding to the target audio.

10. An audio play apparatus, comprising:
a recommended audio acquisition module is configured to in response to receive an instruction of acquiring a recommended audio input through an audio playback interface, acquire the recommended audio;
a recommended audio playback module is configured to in response to receive an instruction of playing the recommended audio, save the playback information of a target audio currently played on a audio playback interface, and play the recommended audio;
a target audio playback module is configured to in response to receiving an instruction of ceasing to play the recommended audio,and play the target audio on the audio playback interface according to the playback information.

11. The apparatus according to claim 10, wherein the recommended audio acquisition module comprises:
an audio recommendation interface display unit is configured to in response to an instruction of scrolling to the audio playback interface, and display an audio recommendation interface, wherein the audio recommendation interface includes at least one recommended audio;
a recommended audio selection unit is configured to receive recommended audio selected for the audio recommendation interface.

12. The apparatus according to claim 10, wherein the recommended audio playback module comprises:
a playback information storage unit is configured to in response to receiving a playback instruction input for the recommended audio, cease the playback of the target audio currently played on the audio playback interface, and save the playback information of the target audio;
a recommended audio playback unit is configured to display the temporary playback interface on the audio recommendation interface, and play the recommended audio on the temporary playback interface.

13. The apparatus according to claim 12, wherein the target audio playback module comprises:
a temporary playback interface close unit is configured to in response to receiving close instruction input for the temporary playback interface, and close the temporary playback interface;
a target audio playback unit is configured to play the target audio on the audio playback interface according to the play information.

14. The apparatus according to claim 12, wherein the recommended audio playback module is configured to:
acquire the temporary player corresponding to the temporary playback interface, and use the temporary player to play the recommended audio on the temporary playback interface, wherein the temporary player is different from the player corresponding to the audio playback interface.

15. The apparatus according to claim 13, wherein the recommended audio playback module comprises:
a recommended audio adding unit is configured to in response to receiving playback instruction input for the recommended audio, and adding the recommended audio to temporary playlist;
a player reset unit is configured to reset the player corresponding to the audio playback interface based on the temporary playlist, and play the recommended audio on the audio playback interface with the player.

16. The apparatus according to claim 14, wherein the target audio playback module comprises:
a recommended audio cease unit is configured to in response to receiving the playback cease instruction input for the audio playback interface, and ceasing the recommended audio;
a target audio playback unit is configured to play the target audio on the audio playback interface according to the play information.

17. The apparatus according to claim 16, wherein the target audio playback unit is configured to:
acquire a playback progress corresponding to the target audio based on the playback information;play remaining audio corresponding to the target audio according to the playback progress.

18. The apparatus according to claim 10, wherein the apparatus further comprises:
a prompt information output module is configured to output a prompt information on whether to retain the recommended audio;
the recommended audio adding unit is further configured to:
in response to receiving the confirmation instruction for the prompt information, add the recommended audio to the playlist corresponding to the target audio.

19. A computer-readable storage medium having stored therein instructions that, when executed by a processor, cause the processor to process method according to any one of claims 1-9.

20. An terminal, comprising:
a memory;
a processor; and
a computer program stored on a memory and executable on a processor;
wherein the processor is configured to execute computer program to process method according to any one of claims 1-9.
